# EUROPEAN PATENT SPECIFICATION

(11) **EP 1 242 651 B1**
(45) Date of publication and mention of the grant of the patent: **25.02.2009**
(21) Application number: 00985228.6
(22) Date of filing: 21.12.2000
(51) Int. Cl.: C23F 3/06, C23C 22/48, C23C 22/34

(54) **BRIGHTENING/PASSIVATING METAL SURFACES WITHOUT HAZARD FROM EMISSIONS OF OXIDES OF NITROGEN**
GLÄNZUNG UND PASSIVIERUNG VON OBERFLÄCHEN OHNE GEFAHR VON STICKSTOFFOXIDEMISSIONEN
BRILLANTAGE/PASSIVATION DE SURFACES METALLIQUES SANS RISQUES D'EMISSIONS D'OXYDES D'AZOTE

(30) Priority: 30.12.1999 US 174193 P
(43) Date of publication of application: 25.09.2002
(73) Proprietor: Henkel AG & Co. KGaA, 40589 Düsseldorf (DE); ThyssenKrupp Acciai Speciali Terni S.p.A., 05100 Terni (IT)
(72) Inventor: GIORDANI, Paolo, Bruno, I-26013 Crema (IT); GASPARETTO, Valentino, I-23887 Olgiate Molgora (IT); NEGRI, Dario, I-26010 Bagnolo Cremasco (IT)
(74) Representative: Endres, Helmut
(86) International application number: PCT/EP2000/013088
(87) International publication number: WO 2001/049899

(56) References cited:
- EP-A- 0 816 532
- GB-A- 1 449 525
- US-A- 4 437 928
- US-A- 5 364 549
- DATABASE WPI Section Ch, Week 199834 Derwent Publications Ltd., London, GB; Class L03, AN 1998-393918 XP002181504 & JP 10 158869 A (NIPPON HYOMEN KAGAKU KK) , 16 June 1998 (1998-06-16)

## Description

### BACKGROUND OF THE INVENTION

"Pickling" is a process applied to metallic surfaces, particularly those of iron and steel but also to various alloys of nickel, copper, and other metals. Usually, pickling is the first chemical treatment applied to a metallic surface after the surface has been formed into the shape and size desired for at least intermediate use by some means that cause the metal surface to be coated with a visible oxide film that may be called "scale", "smut", "discoloration", "oxide", red, white, or black "rust", or some similar term.

The first chemical treatment in a pickling process is generally a concentrated acid or alkaline aqueous solution, for example 10 - 25 % sulfuric, nitric, or hydrochloric acid or 10 - 40 % sodium hydroxide solution. Often such solutions contain an inhibitor that reduces the rate of dissolution of elemental metal without substantially reducing the rate of dissolution of metal oxides. For example, various aromatic amines are very useful inhibitors in acidic pickling solutions and silicate salts are useful inhibitors in alkaline solutions. These concentrated solutions used at the beginning of pickling, however, rarely leave the metal surface in a desirable condition for immediate application of protective coatings of any type. Therefore, the last step of a complete pickling process usually is a chemical treatment operation with at least one and often both of the following two major goals: (a) to obtain a thoroughly clean and bright metallic surface by removing any soil, smut, spots, and/or any other dullness or discoloration formed during or left behind by the primary pickling step and (b) to passivate the metal surface by promoting the formation of a thin oxide or other oxygen-atom-containing layer, with corrosion resistance superior to that of the bare metallic surface, over the metallic surface.

In most instances, both of these goals are achieved by contacting the metal surface after the primary pickling treatment with an oxidizing aqueous solution, such as nitric acid or chromic acid solutions, alone or in mixture with a minor amount of other acids (e.g. HF).

In the more specific case of stainless steel pickling, a major traditional pickling process using mixed HNO₃/HF acids includes, after one or more primary pickling operation(s) in which the stainless steel surfaces are contacted with HNO₃ (10 to 15 %)-HF (2 to 5 %) solutions, a final operation in which the metallic surface is contacted with an aqueous liquid, the chemical composition of which is dependent on the type of stainless steel. Generally, this last pickling treatment liquid, which is designated hereinafter as a "brightening and passivating liquid", contains the following ingredients and is used at the following temperatures: HNO₃ for mostferritic and/or martensitic grades of stainless steel that are cold and hot rolled, used at a low temperature (< 30 °C); HNO₃ combined with a very small amount of HF (< 1 %), used at a low temperature (< 30 °C), for specific ferritic and/or martensitic grades that need a little etch to remove the smut from both cold and hot rolled surfaces; and HNO₃ + HF (1 to 2 %) for austenitic grades of stainless steel that have been cold and hot rolled, used at a medium temperature (20 - 50 °C).

Recently, new pollution-reducing pickling processes utilizing aqueous solutions of sulfuric acid, HF, and Fe³⁺ have been developed to overcome the pollution problems generated by the presence of nitric acid. In such pickling processes, hydrogen peroxide is added to the solution, and/or air or another source of elemental oxygen is blown through the solution, to restore the desired concentration of trivalent iron cations as the latter are depleted by being reduced to divalent iron cations during a pickling process. In practice, hydrogen peroxide is usually used in preference to relying on elemental oxygen alone in such a process, because the amount of elemental oxygen needed and the fact of the existence of elemental oxygen under normal conditions of temperature and pressure only as a gas require that special equipment be provided in many existing plants to prevent losses of pickling solution by entrainment in the large volume of gas flow required through the pickling solution. These new processes give pickling performances fully as satisfactory as those obtained with the traditional high polluting HNO₃/HF mixed acid system.

In principle, hydrogen peroxide could be used in such a process by constantly monitoring the oxidation-reduction (hereinafter usually abbreviated as "redox") potential of the solution and adding hydrogen peroxide continuously and only to the extent needed to maintain the potential. In practice, however, many pickling plants are not equipped for such continuous monitoring and addition, so that hydrogen peroxide is added from the beginning of a pickling process and afterwards is replenished only at fairly long time intervals. When so used, hydrogen peroxide needs to be stabilized against spontaneous decomposition in order to achieve the highest possible oxidation reaction yield during the oxidation of bivalent iron to trivalent iron. Many stabilizers for this purpose, such as acetamide, phenacetine, tertiary alcohols, and the like, are known in the art and are available commercially, and many of these stabilizers work quite well when used in the primary stages of pickling.

The main problem in completely eliminating HNO₃ from pickling processes using these new pollution-reducing pickling solutions is in the final brightening and passivating liquids. These liquids generally (with some exceptions) have much lower dissolution rates for metal and/or metal scale than do the primary pickling solution(s) used earlier in a pickling process. As a consequence, the brightening and pickling liquids can usually be used for one week up to several months before these liquids accumulate a sufficient concentration of metal ions, dissolved from the surfaces being pickled, to require replacing the brightening and passivating liquids.

Attempts have been made to substitute for HNO₃ in traditional brighteningand passivating liquids a combination of non-oxidizing acid such as H₂SO₄ or H₃PO₄ (sometimes with a small amount of HF) with sufficient hydrogen peroxide to achieve a redox potential of the solution of at least about 550 millivolts (this unit being hereinafter usually abbreviated as "mV") more oxidizing than a silver-saturated silver chloride electrode. (The redox potential can be measured, as is known to those skilled in the art, by immersing a chemically inert electrode such as platinum in the solution and measuring, by some method that draws only minimal electric current, the potential of this electrode compared to a standard reference electrode also immersed in the same solution.) Stabilizers of the types listed above have been included in such brightening and passivating liquids, but their useful lives have nevertheless been observed to be very short. As a consequence, in many industrial applications using pollution-reducing primary pickling process as described above, the final brightening and passivating liquid is still an HNO₃ or HNO₃-HF solution. When a brightening and passivating liquid that does not contain any nitrogenous acid must be used, very high concentrations of hydrogen peroxide are needed to obtain technically satisfactory results, and the costs are very high compared to the traditional process because of rapid spontaneous decomposition of hydrogen peroxide in such high concentrations. This is particularly true in pickling ferritic/martensitic grades of stainless steel, for which the use of a brightening and passivating liquid with a high redox potential is necessary to remove black smut formed during the earlier stage(s) of pickling. GB-A-1449525 discloses a method of stabilizing acid aqueous solutions of hydrogen peroxide containing copper ions capable of catalytically decomposing hydrogen peroxide. Said method comprising adding as stabilizer to said aqueous solution at least one glycol ether represented by the general formula R (OCH₂ CH₂)ₙ-OH, wherein R is an alkyl group containing 1 to 4 carbon atoms and n is 1 or 2. Said aqueous solution contains a mineral acid, selected from sulphuric acid. Said method is used in chemically solubilizing treatments, such as pickling, etching and chemical polishing of copper and copper alloy surfaces.

Accordingly, a major object of this invention is to provide technically and economically satisfactory brightening and passivating liquids for completing a pickling process without any need to use nitric acid or any other ingredient that has a hazard of releasing toxic oxides of nitrogen into the environment of the pickling process. Other alternative and/or more detailed objects will become apparent from the detailed description below.

Except in the claims and the operating examples, or where otherwise expressly indicated, all numerical quantities in this description indicating amounts of material or conditions of reaction and/or use are to be understood as modified by the word "about" in describing the broadest scope of the invention. Practice within the numerical limits stated is generally preferred, however. Also, throughout the description, unless expressly stated to the contrary: percent, "parts of", and ratio values are by weight or mass; the term "polymer" includes "oligomer", "copolymer", "terpolymer" and the like; the description of a group or class of materials as suitable or preferred for a given purpose in connection with the invention implies that mixtures of any two or more of the members of the group or class are equally suitable or preferred; description of constituents in chemical terms refers to the constituents at the time of addition to any combination specified in the description or of generation *in situ* within the composition by chemical reaction(s) noted in the specification between one or more newly added constituents and one or more constituents already present in the composition when the other constituents are added, and does not preclude unspecified chemical interactions among the constituents of a mixture once mixed; specification of constituents in ionic form additionally implies the presence of sufficient counterions to produce electrical neutrality for the composition as a whole and for any substance added to the composition; any counterions thus implicitly specified preferably are selected from among other constituents explicitly specified in ionic form, to the extent possible; otherwise such counterions may be freely selected, except for avoiding counterions that act adversely to an object of the invention; the word "mole" means "gram mole", and the word itself and all of its grammatical variations may be used for any chemical species defined by all of the types and numbers of atoms present in it, irrespective of whether the species is ionic, neutral, unstable, hypothetical, or in fact a stable neutral substance with well defined molecules; the terms "solution", "soluble", "homogeneous", and the like are to be understood as including not only true equilibrium solutions or homogeneity but also dispersions that show no visually detectable tendency toward phase separation over a period of observation of at least 100, or preferably at least 1000, hours during which the material is mechanically undisturbed and the temperature of the material is maintained within the range of 18 - 25 °C; the first definition of an acronym or other abbreviation applies to all subsequent uses of the same acronym or other abbreviation; and the term "paint" and its grammatical variations includes all similar types of coatings that may be described by more specialized names such as "lacquer", "varnish", "primer coat", "top coat", or the like.

### BRIEF SUMMARY OF THE INVENTION

It has been found that certain organic substances provide much improved stabilization of hydrogen peroxide in aqueous solutions that contain hydrogen peroxide, which may be introduced into the solutions directly as hydrogen peroxide and/or in the form of other peroxy compounds that are capable of yielding hydrogen peroxide in aqueous solution, particularly when these solutions also contain dissolved metal cations with a valence of two or more, still more particularly when the solutions contain dissolved cations of at least one of iron, nickel, cobalt, chromium, manganese, molybdenum, titanium, and copper. Suitable organic substances for this purpose are selected from the group consisting of:
- substances constituted of molecules that contain both at least one ether moiety and at least one hydroxyl moiety in each molecule.

Stabilization of the hydrogen peroxide in such solutions can be further improved by a synergistic effect with oxyacids of phosphorus. Brightening and passivating liquids incorporating such stabilizers and free from any concentration of nitrogenous compounds that present a hazard of emissions of toxic oxides of nitrogen into the environment of a pickling process are fully satisfactory for use to complete pickling.

Embodiments of the invention include processes for brightening and passivating and complete pickling processes incorporating such brightening and passivating.

### Detailed description of the invention and preferred embodiments.

According to the present invention there is provided a process of brightening and passivating a stainless steel surface by contacting said surface with a brightening and passiviating liquid composition which comprises water and the following dissolved components:
(A) at least one acid;
(B) at least one substance containing a peroxy moiety; and
(C) at least one organic substance selected from the group consisting of:
   substances constituted of molecules that contain both at least one ether moiety and at least one hydroxyl moiety in each molecule;
   wherein
   acid component (A) comprises an acid selected from the group consisting of sulfuric, sulfurous, hydrofluoric, and hydrochloric acids in a concentration of at least 5 grams of acid per liter of total brightening and passivating liquid, and, in addition, also comprises a phosphorus-containing acid in an amount of not more than 25 grams per liter of total brightening and passivating liquid

Optionally said liquid composition contains:
(D) metal cations;
(E) at least one substance that is not part of any of immediately previously recited components (A) through (D) but is known in prior art as a stabilizer of hydrogen peroxide against decomposition; and
(F) at least one surfactant that is not part of any of immediately previously recited components (A) through (E).

Still more preferably, component (A) consists of or at least comprises orthophosphoric acid.

The total concentration of acid in a brightening and passivating liquid according to the invention may vary over a wide range, depending on the particular metallic surface being treated, the particular acid used, and the preceding pickling treatments. Alternatively, a brightening and passivating liquid according to the invention preferably contains a concentration of acid that is at least, with increasing preference in the order given, 7 or 9 grams of acid per liter of total brightening and passivating liquid, this unit being hereinafter usually abbreviated as "g/l", and independently preferably is not more than, with increasing preference in the order given, 500, 400, 300, 200, 175, 150, or 140 g/l.

It will be understood by those skilled in the art that instead of adding phosphorus-containing acid(s) directly to make a brightening and passivating liquid according to the invention, it is possible to add salts of the phosphorus-containing acid(s) together with at least one more strongly ionizing acid, which will generate the corresponding phosphorus-containing acids *in situ.*

Component (B) is preferably selected from the group consisting of hydrogen peroxide, peroxysulfuric acid; peroxycarbonic acid, peroxyboric acid, peroxyphosphoric acid, peroxydiphosphoric acid, and salts of all of the preceding named acids in this sentence. For economy and convenience at least, hydrogen peroxide is most preferred, particularly inasmuch as all of the other materials in this group are believed to function by spontaneously generating hydrogen peroxide (and/or an ion or free radical derivable from hydrogen peroxide) by hydrolysis in aqueous solution. Therefore the concentration of component (B) is measured as the stoichiometric equivalent as hydrogen peroxide of all peroxy-moiety-containing substances dissolved in the brightening and passivating liquid. For most pickling processes, this concentration preferably is at least, with increasing preference in the order given, 0.5, 1.0, 1.5, 2.0, 2.5, 3.0, 3.5, 4.0, 4.5, 5.0, or 5.5 g/l and independently preferably, at least for economy, is not more than, with increasing preference in the order given, 50, 40, 30, 25, 20, 18, 16, 14, 12, or 10 g/l. However, if an exceptionally high or low redox potential is needed in a particular brightening and passivating liquid because of treating an unusual type of metallic surface, concentrations of component (B) outside these ranges may be preferred and be used without departing from the invention.

Component (C) is selected as described above, i.e., from substances constituted of molecules each of which contains at least one hydroxy moiety and also at least one ether moiety. Such substances more preferably are constituted of molecules having the following characteristics, each preferred characteristic being preferable by itself, independently from the others, and combinations of these preferred characteristics being still more preferable, the overall preference being greater the larger the number of preferred characteristics combined in the molecules:
- each molecule has a number of carbon atoms that is at least, with increasing preference in the order given, 3, 4, 5, or 6 and independently preferably is not more than, with increasing preference in the order given, 100, 50, 40, 30, 25, 20, 16, 14, 12, 10, or 8;
- each molecule has a number of hydroxyl groups that is not more than, with increasing preference in the order given, 3, 2, or 1; and
- each molecule has a number of ether moieties that is not more than, with increasing preference in the order given, 50, 40, 30, 25, 20, 15, 10, 8, 6, 4, 3, or 2; and
- at least one oxygen atom in an ether moiety in each molecule is bonded to a terminal monovalent alkyl group that contains at least 2, or more preferably at least 3, carbon atoms.

Among the surfactants (F) the most preferred are nonionic surfactants with molecules that could be made by ethoxylating fatty alcohols having from 10 to 22 carbon atoms and a single hydroxyl moiety, and then capping the poly(oxyethylene) chain by substituting for the hydrogen atom in the terminal hydroxy moiety an alkyl group or a halo atom. Alkoxylated amines and alkoxylated quaternary ammonium cationic surfactants are next most preferred; these also preferably have at least one, more preferably exactly one, hydrophobe moiety with from 10 to 22 carbon atoms. However, if otherwise satisfactory brightening and passivating liquids according to the invention are found to need more surfactant activity in order to promote uniform wetting or the like, surfactants of these types are preferably used, in amounts normal for exerting their surfactant properties, rather than other surfactants, which would be part of optional component (F).

The concentration of component (C) in a brightening and passivating liquid according to the invention preferably is at least, with increasing preference in the order given, 0.2, 0.4, 0.6, 0.8,1.0, 2.0, 3.0, 4.0, or 5.0, g/l. Independently, primarily for economy, the concentration of component (C) preferably is not more than, with increasing preference in the order given, 75, 50, 40, 30, 20, or 15 g/l. Also independently, the mass in the brightening and passivating liquid of all phosphorus-containing acids, measured as their stoichiometric equivalent as H₃PO₄, with the stoichiometry being based on equal numbers of phosphorus-containing anions actually or potentially formed by ionization in the aqueous solution, preferably has a ratio to the mass of component (C), measured as its stoichiometric equivalent as H₂O₂, both masses being measured in the same unit, that is at least, with increasing preference in the order given, 0.03:1.00, 0.06:1.00, 0.10:1.00, 0.14:1.00, 0.20:1.00, 0.25:1.00, 0.30:1.00, 0.5:1.00, 0.7:1.00, 0.9:1.00, 1.1:1.00, 1.3:1.00, 1.5:1.00, 2.0:1.00, or 2.5:1.00 and independently preferably, primarily for economy, is not more than, with increasing preference in the order given, 100:1.00, 75:1.00, 50:1.00, 40:1.00, 30:1.00, 20:1.00, 15:1.00, 10:1.00, 8:1.00, 6:1.00, 4.0:1.00, 3.5:1.00, or 3.0:1.00.

The invention is most advantageously, and therefore is preferably, applied in brightening and passivating liquids that contain optional component (D) of metal cations. However, such cations need not necessarily be included in the brightening and passivating liquid when it is first prepared, as they will tend to accumulate rapidly in the brightening and passivating liquid during its normal use, as a result of dissolution of such cations from the surfaces being pickled and/or drag-in of such cations from solutions used in earlier parts of an overall pickling process. (In some instances, it is preferred to include such dissolved metal cations in the brightening and passivating liquid when it is prepared, because this will result in performance of the liquid early in its useful life that is more nearly consistent with the performance of the same liquid later in its useful life.)

More specifically, a brightening and passivating liquid according to the invention preferably contains, at some time during its use, a concentration of total component (D), or more preferably a concentration of iron cations alone, that is at least, with increasing preference in the order given, 0.05, 0.10, 0.20, 0.30, 0.40, 0.5, 1.0, 1.5, 2.0, 2.5, 3.0, 3.5, 4.0, 4.5, or 4.9 g/l. The brightening and passivating liquid may contain at least as much as, with increasing preference in the order given, 100, 75, 50, 40, 30, 25, 20, or 15 g/l of component (D) and still function properly according to the invention.

Optional components (E) and (F) of prior art stabilizers and surfactants not part of the previously recited components are usually preferably not present in a brightening and passivating liquid according to the invention. If surfactant activity is needed, a surfactant that can qualify as part of component (C) is preferred, as already discussed above. More particularly, at least for economy (by avoiding the expense of an unnecessary component that could actually damage the performance) a brightening and passivating liquid according to this invention preferably contains not more than, with increasing preference in the order given, 10, 5, 2, 1.0, 0.5, 0.2, 0.05, 0.02, 0.005, 0.002, 0.0005, or 0.0002 percent of any of the following substances, the preference being independent for each substance named: solutes containing the metal tin in either cationic or anionic form; silicates; any organic material that is a chelating agent and is not part of one of the necessary components (A) through (C) as described above; ortho-benzene disulfonic acid; para-hydroxy benzoic acid; allyl alcohol; tertiary-butyl alcohol; picolinic acid; 8-hydroxy quinoline; phenol; acetamide; phenyl acetamide; succinic acid; glutaric acid; and adipic acid.

In a process of brightening and passivating according to the invention, the temperature of the brightening and passivating liquid preferably is maintained during its contact with the metallic surface being brightened and passivated at a temperature that is at least, with increasing preference in the order given, 5, 10, 15, 20, 25, or 29 °C and independently preferably is not more than, with increasing preference in the order given, 60, 55, 50, 45, 40, or 35 °C. The time of contact between the brightening and passivating liquid and the metallic surface should be sufficient to achieve the brightening and passivating desired. As a general guideline, the contact time normally preferably is at least, with increasing preference in the order given, 1.0, 2.0, or 3.0 seconds if contact is by spraying and at least, with increasing preference in the order given, 0.2, 0.5, or 1.0 minutes if contact is by immersion. Independently, primarily for economy, the contact time preferably is not more than, with increasing preference in the order given, 200, 150, 100, 75, 50, 40, 30, 20, or 15 seconds if the contact is by spraying and not more than, with increasing preference in the order given, 200, 150, 100, 75, 65, 55, 50, 45, 40, 35, or 30 minutes if the contact is by immersion.

In extended processes according to the invention, a brightening and passivating process according to the invention preferably is combined with one or more primary pickling process steps that also do not have any hazard of generating gaseous toxic nitrogen oxides, or more preferably with a process as described in one or more of International Patent Application WO 99/32690, U. S. Patent 5,843,240 of Dec. 1, 1998 to Pedrazzini et al., U. S. Patent 5,417,775 of May 23, 1995 to Pedrazzini, and U. S. Patent 5,354,383 of Oct. 11, 1994 to Bianchi.

The invention may be further appreciated from the following examples and comparison examples.

### GENERAL CONDITIONS FOR THE EXAMPLES AND COMPARISON EXAMPLES

Unless otherwise specified below, in all the experimental data concerning the stability of hydrogen peroxide: the concentration of residual hydrogen peroxide in actual or candidate brightening and passivating liquids after the passage of time since the liquid was prepared was measured by permanganometric titration; the concentration specified for hydrogen peroxide or any other chemical substance whether identified by name or formula was for the pure compound; any otherwise unspecified balance of any liquid was water; and the temperature of the liquid during the time after which the concentration of residual hydrogen peroxide was measured was constantly maintained at 30 ± 1 °C by a Haake thermostat. (Temperature can have a great influence on the stability of hydrogen peroxide; this temperature was selected because it is quite representative of most industrial applications for a brightening and passivating solution when used as a final metal treatment operation in a pickling process.)

### Notes

Ethylene Glycol, Mono n-Butyl Ether is also known as "Butyl Cellosolve^{™}" and may be abbreviated hereinafter as "BCS", and Diethylene Glycol, Mono n-Butyl Ether is also known as "Butyl Carbitol" and may be abbreviated hereinafter as "BTC".

### COMPARISON EXAMPLE GROUP 1

In this group, phosphoric acid was included in the brightening and passivating liquid as an alternative to a glycol monoether substance. All of the solutions included the following ingredients: 20 g/l of sulfuric acid; 10 g/l of H₂O₂; 5 g/l of Fe⁺³, supplied to the liquid as ferric sulfate, and a concentration of H₃PO₄ as shown in Table 1; the entry "n.d." means "not determined". These results indicate that phosphoric acid alone has a slight inhibiting effect, but it is much weaker than that of glycol monoethers.

**Table 1**

| | **Percent Residual Active H₂O₂ in Solution After:** | | | |
|---|---|---|---|---|
| **H₃PO₄ Addition, g/l** | **Initially** | **2 Hours** | **12 Hours** | **24 Hours** |
| **0.0** | 100 | 0 | 0 | 0 |
| **10** | 100 | n.d. | 50 | 0 |
| **20** | 100 | n.d | 55 | 7.0 |
| **30** | 100 | n.d | 60 | 16.0 |

### EXAMPLE GROUP 2

In this group, the solutions were the same as in Group 1, except that each solution also contained 5 g/l of BTC and the amounts of phosphoric acid were as shown in Table 2. In the rightmost column of Table 2 are results for a solution treated in the same manner as the others except that air was blown through it during the aging of the solution. It is evident by comparison with previous tables that the stability achieved in this group is far better than that achieved by either BTC or phosphoric acid alone. Also, there was little or no effect of the air blowing on the stability results.

### COMPARISON EXAMPLE GROUP 3

In this group, sulfuric acid was omitted. Each solution contained 34 g/l of phosphoric acid; 10 g/l of H₂O₂; 5 g/l of Fe⁺³, supplied to the liquid as ferric sulfate, and, for the example only, a concentration of 5.0 g/l of BTC. Results are shown in Table 3. These results show that the stability is even better than in the presence of

**Table 2**

| | **Concentration of H₃PO₄ in g/l** | | | | |
|---|---|---|---|---|---|
| | **0** | **5** | **15** | **25** | **25 (Air)** |
| **Percent of Initial H₂O₂ Remaining after:** | | | | | |
| - **0 Hours** | 100 | 100 | 100 | 100 | 100 |
| - **24 Hours** | 50 | 83 | 98 | 100 | 100 |
| - **48 Hours** | 16.7 | 65 | 93 | 97 | 96 |
| - **72 Hours** | 0.0 | 48 | 88 | 95 | 92 |
| **- 192 Hours** | 0.0 | 15.3 | 70 | 81 | 85 |

sulfuric acid. However, this kind of solution is more expensive and slower to remove heavy scale than the sulfuric-acid containing solutions in preceding examples. It could be advantageously used on low chromium grades of steel that are readily attacked by sulfuric acid; in this instance, the use of phosphoric acid as the only acid strongly reduces the etching and provides passivation at the same time.

**Table 3**

| | **Percent of Initial H₂O₂ Remaining after:** | | |
|---|---|---|---|
| | **0 Hours** | **24 Hours** | **48 Hours** |
| **Comparison 3.1** | 100 | 72 | 48 |
| **3.2** | 100 | 100 | 97 |

### EXAMPLE AND COMPARISON EXAMPLE GROUP 4

In this group, a phosphonate was used instead of phosphoric acid. Thephosphonate was BAYBHIT^{™} PBS-AM, a commercial product reported by its supplier to be a phosphonate that is stable and soluble in hydrogen peroxide solutions. In the comparison examples shown in Table 4.1, each solution contained: 20 g/l of sulfuric acid; 10 g/l of H₂O₂; 5.0 g/l of Fe⁺³, supplied to the liquid as ferric sulfate, and a concentration of phosphonate as shown in Table 4.1. In the examples according to the invention shown in Table 4.2, each solution contained the same ingredients as for the examples in Table 4.1 and also contained 2.0 g/l of BTC. The results are shown in the Tables below; they indicate that even the relatively small amount of glycol monoether in the Examples considerably increases the long term stability of the hydrogen peroxide in these solutions.

**Table 4.1**

| **Percent of Initial H₂O₂ Remaining after:** | **Concentration of Phosphonate in the Solutions** | | | | |
|---|---|---|---|---|---|
| | **0.0** | **4 g/l** | **8 g/l** | **12 g/l** | **16 g/l** |
| **- 0.0 Hours** | 100 | 100 | 100 | 100 | 100 |
| **- 2.0 Hours** | 0 | n.d | n.d. | n.d. | n.d. |
| **- 16 Hours** | 0 | 2.4 | 36 | n.d. | n.d. |
| **- 24 Hours** | 0 | 0 | 0.0 | 61 | 72 |
| **- 48 Hours** | 0 | 0 | 0.0 | 0.0 | 38 |

**Table 4.2**

| **Percent of Initial H₂O₂ Remaining after** | **Concentration of Phosphonate in the Solutions** | | | |
|---|---|---|---|---|
| | **0.0** | **2.5 g/l** | **5.0 g/l** | **10.0 g/l** |
| **- 0.0 Hours** | 100 | 100 | 100 | 100 |
| **- 24 Hours** | 18.0 | 54 | 65 | 77 |
| **- 28 Hours** | 0 | n.d. | n.d. | n.d. |
| **- 48 Hours** | 0 | 0 | 0.0 | 61 |

### EXAMPLE AND COMPARISON EXAMPLE GROUP 5

In this group, a series of four brightening and passivating liquids was studied to simulate the aging of a type of treatment commercially used for American Iron and Steel Institute (this organization being hereinafter usually abbreviated as "AISI") Type 409 Stainless Steel. The concentrations of at least one of fluoride and iron cations were increased from one solution to the next. The compositions of the four base solutions are shown in Table 5.0

**Table 5.0**

| **Ingredient** | **Grams of Ingredient per Liter of Solution:** | | | |
|---|---|---|---|---|
| | **9.1** | **9.2** | **9.3** | **9.4** |
| H₂SO₄ | 30 | 30 | 30 | 30 |
| HF | 0.0 | 10.0 | 15.0 | 20 |
| H₂O₂ | 5.6 | 5.6 | 5.6 | 5.6 |
| Fe⁺³ | 5.0 | 5.0 | 10.0 | 15.0 |

To make brightening and passivating liquids according to the invention, varying amounts of a mixture containing equal parts by weight of BCS and H₃PO₄ were added to these base solutions in amounts shown in Tables 5.1- 5.4, and the percentages of the initial concentration of hydrogen peroxide found after various times of aging at 30 °C were determined. The results are shown in Table 5.1 for brightening and passivating liquids made with base solution 5.1, in Table 5.2 for brightening and passivating liquids made with base solution 5.2, in Table 5.3 for brightening and passivating liquids made with base solution 5.3, and in Table 5.4 for brightening and passivating liquids made with base solution 5.4.

**Table 5.1**

| **Percent of Initial H₂O₂ Remaining after the Following Numbers of Hours** | **Concentration of Mixture of BCS and H₃PO₄ in the Solutions** | | | |
|---|---|---|---|---|
| | **0.0 g/l** | **2.1 g/l** | **4.3 g/l** | **8.6 g/l** |
| **0.0** | 100 | 100 | 100 | 100 |
| **2.0** | 48 | n.d | n.d | n.d |
| **4.0** | 19 | n.d | n.d | n.d |
| **6.0** | 9.5 | 91 | 96 | 95 |
| **16** | 0.0 | n.d. | n.d. | n.d. |
| **24** | n.d. | 49 | 75 | 79 |
| **32** | n.d. | 0.0 | 66 | n.d. |
| **48** | n.d. | n.d. | 42 | 61 |
| **54** | n.d. | n.d. | 26 | n.d. |
| **64** | n.d. | n.d. | 0.0 | n.d. |
| **72** | n.d. | n.d. | n.d. | 46 |
| **96** | n.d. | n.d. | n.d. | 32 |
| **102** | n.d. | n.d. | n.d. | 14,0 |

**Table 5.2**

| **Percent of Initial H₂O₂ Remaining after the Following Numbers of Days** | **Concentration of Mixture of BCS and H₃PO₄ in the Solutions** | | | |
|---|---|---|---|---|
| | **0.0 g/l** | **2.1 g/l** | **4.3 g/l** | **8.6 g/l** |
| **0.00** | 100 | 100 | 100 | 100 |
| **0.66** | 24 | n.d. | n.d. | n.d. |
| **0.83** | 16 | n.d. | n.d. | n.d. |
| **1.00** | 12 | 100 | 100 | n.d. |
| **1.50** | 0 | n.d. | n.d. | n.d. |
| **2.0** | n.d. | 99 | 100 | n.d. |
| **3.0** | n.d. | 98 | 99 | n.d. |
| **4.0** | n.d. | n.d. | 96 | 96 |
| **5.0** | n.d. | 90 | n.d. | 95 |
| **6.0** | n.d. | 8.5 | 89 | 94 |
| **7.0** | n.d. | 0 | 81 | 90 |
| **8.0** | n.d. | n.d. | 71 | 86 |
| **9.0** | n.d. | n.d. | 9.5 | 80 |
| **10.0** | n.d. | n.d. | 0.0. | n.d. |
| **11.0** | n.d. | n.d. | n.d. | 58 |
| **12.0** | n.d. | n.d. | n.d. | 41 |
| **13.0** | n.d. | n.d. | n.d. | 19 |
| **14.0** | n.d. | n.d. | n.d. | 0 |

**Table 5.3**

| **Percent of Initial H₂O₂ Remaining after the Following Numbers of Hours** | **Concentration of Mixture of BCS and H₃PO₄ in the Solutions** | | | |
|---|---|---|---|---|
| | **0.0 g/l** | **2.1 g/l** | **4.3 g/l** | **8.6 g/l** |
| **0.0** | 100 | 100 | 100 | 100 |
| **2.0** | 71 | n.d. | n.d. | n.d. |
| **4.0** | 46 | n.d. | n.d. | n.d. |
| **6.0** | 30 | n.d. | n.d. | n.d. |
| **16** | 9.0 | 95 | n.d. | n.d. |
| **24** | 0.0 | 94 | 93 | n.d. |
| **48** | n.d. | 80 | 87 | 87 |
| **72** | n.d. | 0.0 | 73 | 79 |
| **96** | n.d. | n.d. | 56 | 69 |
| **114** | n.d. | n.d. | 27 | n.d. |
| **120** | n.d. | n.d. | n.d. | 55 |
| **131** | n.d. | n.d. | 0.0 | n.d. |
| **144** | n.d. | n.d. | n.d. | 36 |
| **150** | n.d. | n.d. | n.d. | 31 |

### EXAMPLE AND COMPARISON EXAMPLE GROUP 6

In an industrial plant using a nitric acid based passivation operation as the end of a pickling process for ferritic-martensitic alloy steels containing 8 to 9 % of chromium, red fumes were emitted and the entire volume of the tank had to be replaced every day. This unsatisfactory comparison example was replaced by an example according to the present invention that contained 10 g/l of H₃PO₄, 10 g/l of butyl carbitol, and 10 g/l of H₂O₂. With this brightening and passivating liquid according to the invention, about 800 tons of ferritic/martensitic and other even less noble steels were brightened and passivated in a single volume over 10 working days without any replacement. After this time, the concentration of hydrogen peroxide was more than 95 % of the starting concentration. The surface quality of all of the pickled surfaces was very good.

**Table 5.4**

| **Percent of Initial H₂O₂ Remaining after the Following Numbers of Hours** | **Concentration of Mixture of BCS and H₃PO₄ in the Solutions** | | | |
|---|---|---|---|---|
| | **0.0 g/l** | **2.1 g/l** | **4.3 g/l** | **8.6 g/l** |
| **0** | 100 | 100 | 100 | 100 |
| **2** | 58,2 | n.d. | n.d. | n.d. |
| **4** | 33,7 | n.d. | n.d. | n.d. |
| **16** | 5,3 | 90 | 92 | 90 |
| **24** | 0 | 82 | 86 | n.d. |
| **40** | n.d. | 0.0 | 75 | 76 |
| **48** | n.d. | n.d. | 67 | n.d. |
| **65** | n.d. | n.d. | 31 | 54 |
| **72** | n.d. | n.d. | 0 | 24 |
| **96** | n.d. | n.d. | n.d. | 15 |
| **102** | n.d. | n.d. | n.d. | 14 |

### EXAMPLE AND COMPARISON EXAMPLE GROUP 7

For this group the comparison example was a pickling/passivation liquid that contained 120 g/l of HNO₃ and 40 g/l of HF and was used at the end of an industrial pickling cycle for austenitic stainless steels that contained 3 to 5 % of copper. Enough of this copper was dissolved during the earlier stages of pickling to result in the presence in solution of a concentration of 1 to 2 g/l of Cu²⁺ in these solutions used in earlier stages of pickling. The presence of copper in these solutions makes possible a deposition of elemental copper that remains on the surfaces of some of some austenitic stainless steel alloys, such as AISI Type 303 Stainless Steel, after completion of the earlier stages of pickling. The use of a high oxidizing power solution at the end of the total pickling process removes any such copper.

In the example according to the invention, the high oxidizing power solution contained 100 g/l of H₂SO₄, 40 g/l of HF, 15 g/l of hydrogen peroxide, 5 g/l of H₃PO₄, and 5 g/l of BCS = 5 g/l. The operating temperature of this brightening and passivating liquid was maintained within the range from 20 to 30 °C, and air was blown into the bath to agitate it and thereby favor a uniform activity of the solution on the whole surface.

The contact time of the metallic surfaces treated in this bath was about 15 minutes. During one week, about 1500 tons of different grades of austenitic stainless steel wire and rod with diameters ranging from 5.5 mm to 24 mm were pickled in a three stage overall pickling process in which the treatment with the brightening and passivating liquid according to the invention was the last stage. No hydrogen peroxide, BCS, or phosphoric acid was added to the bath during this period.

At the end of this one week of processing, the concentration of copper in the treatment solution for the first stage was about 0.7 g/l and in the treatment solution for the second stage was about 1.5 g/l. However, the surfaces emerging from the third stage treatment according to the invention were observed both visually and by energy-dispersive-X-ray analysis, and no copper was detected by either method. The hydrogen peroxide concentration in the brightening and passivating liquid after this one week was still 13 g/l.

## Claims

1. A process of brightening and passivating a stainless steel surface by contacting said surface with a brightening and passiviating liquid composition which comprises water and the following dissolved components:
(A) at least one acid;
(B) at least one substance containing a peroxy moiety; and
(C) at least one organic substance selected from the group consisting of:
substances constituted of molecules that contain both at least one
ether moiety and at least one hydroxyl moiety in each molecule;
wherein
acid component (A) comprises an acid selected from the group consisting of sulfuric, sulfurous, hydrofluoric, and hydrochloric acids in a concentration of at least 5 grams of acid per liter of total brightening and passivating liquid, and, in addition, also comprises a phosphorus-containing acid in an amount of not more than 25 grams per liter of total brightening and passivating liquid.

2. A process according to claim 1 wherein in the brightening and passivating liquid the mass of all phosphorous-containing acids, measured as their stochiometric equivalent as H₃PO₄, with the stoichiometry being based on equal numbers of phosphorus-containing anions actually or potentially formed by ionization in the aqueous solution, has a ratio to the mass of component (C), both masses being measured in the same unit, that is from 0.03:1.00 to 8:1.00.

3. A process according to any of claims 1 and 2 wherein in the brightening and passivating liquid
- there is a concentration of acid that is at most to 500 g/l; and
- there is a concentration of component (C) that is from 0.4 to 75 g/l.

4. A process according to any of claims 1 through 3, wherein in the brightening and passivating liquid:
- each molecule of component (C) has from 3 to 30 carbon atoms;
- each molecule of component (C) has not more than 3 hydroxyl groups; and
- at least one oxygen atom in an ether moiety in each molecule is bonded to a terminal monovalent alkyl group that contains at least 2 carbon atoms.

5. A process according to claim 1, wherein in the brightening and passivating liquid:
- the mass of all phosphorous-containing acids, measured as their stochiometric equivalent as H₃PO₄, with the stoichiometry being based on equal numbers of phosphorus-containing anions actually or potentially formed by ionization in the aqueous solution, has a ratio to the mass of component (C), both masses being measured in the same unit, that is from 0.7:1.00 to 6:1.00;
- there is a concentration of acid that is at most 140 g/l:
- there is a concentration of component (C) that is from 5 to 30 g/l;
- each molecule of component (C) has from 4 to 10 carbon atoms;
- each molecule of component (C) has not more than 1 hydroxyl group; and
- at least one oxygen atom in an ether moiety in each molecule is bonded to a terminal monovalent alkyl group that contains at least 2 carbon atoms.

6. A process according to any of claims 1 through 5, wherein, at some time during the process, the brightening and passivating liquid contains at least 2.5 g/l of metal ions.

7. A process according to any of claims 1 through 6, wherein the brightening and passivating liquid is maintained during its contact with the metallic surface being brightened and passivated at a temperature that is from 20 to 50 °C.

8. A process according to any of claims 1 through 7, wherein:
- contact between the brightening and passivating liquid and the metal surface is established either by immersion or by spraying; and
- the contact time is not more than 30 seconds if the contact is by spraying, and is not more than 30 minutes if the contact is by immersion.

## Patentansprüche

1. Verfahren zum Polieren und Passivieren einer Oberfläche aus rostfreiem Stahl durch Inkontaktbringen der Oberfläche mit einer flüssigen Polier- und Passivierzusammensetzung, die Wasser und die folgenden gelösten Bestandteile enthält:
(A) mindestens eine Säure;
(B) mindestens eine Substanz, die einen Peroxyanteil enthält; und
(C) mindestens eine organische Substanz, die aus der Gruppe ausgewählt ist, bestehend aus: Substanzen, die aus Molekülen bestehen, die sowohl mindestens einen Etheranteil als auch mindestens einen Hydroxylanteil in jedem Molekül enthalten;
wobei
der Säurebestandteil (A) eine Säure, die aus der Gruppe bestehend aus Schwefelsäure, schwefliger Säure, Fluorwasserstoffsäure und Salzsäure ausgewählt ist, in einer Konzentration von mindestens 5 Gramm Säure pro Liter der gesamten Polier- und Passivierflüssigkeit umfasst und zusätzlich außerdem eine phosphorhaltige Säure in einer Menge von höchstens 25 Gramm pro Liter der gesamten Polier- und Passivierflüssigkeit umfasst.

2. Verfahren nach Anspruch 1, wobei in der Polier- und Passivierflüssigkeit die Masse aller phosphorhaltigen Säuren, als ihr stöchiometrisches Äquivalent als H₃PO₄ gemessen, wobei die Stöchiometrie auf gleichen Anzahlen von phosphorhaltigen Anionen basiert, die tatsächlich oder potentiell durch Ionisation in der wässrigen Lösung gebildet werden, ein Verhältnis zu der Masse des Bestandteils (C) aufweist, wobei beide Massen in derselben Einheit gemessen werden, das von 0,03:1,00 bis 8:1,00 beträgt.

3. Verfahren nach einem der Ansprüche 1 und 2, wobei in der Polier- und Passivierflüssigkeit
- eine Konzentration der Säure vorliegt, die höchstens 500 g/l beträgt; und
- eine Konzentration des Bestandteils (C) vorliegt, die von 0,4 bis 75 g/l beträgt.

4. Verfahren nach einem der Ansprüche 1 bis 3, wobei in der Polier- und Passivierflüssigkeit
- jedes Molekül des Bestandteils (C) von 3 bis 30 Kohlenstoffatome aufweist;
- jedes Molekül des Bestandteils (C) höchstens 3 Hydroxylgruppen aufweist und
- mindestens ein Sauerstoffatom in einem Etheranteil in jedem Molekül an eine einwertige Alkyl-Endgruppe gebunden ist, die mindestens 2 Kohlenstoffatome enthält.

5. Verfahren nach Anspruch 1, wobei in der Polier- und Passivierflüssigkeit:
- die Masse aller phosphorhaltigen Säuren, als ihr stöchiometrisches Äquivalent als H₃PO₄ gemessen, wobei die Stöchiometrie auf gleichen Anzahlen von phosphorhaltigen Anionen basiert, die tatsächlich oder potentiell durch lonisation in der wässrigen Lösung gebildet werden, ein Verhältnis zu der Masse des Bestandteils (C) aufweist, wobei beide Massen in derselben Einheit gemessen werden, das von 0,7:1,00 bis 6:1,00 beträgt;
- eine Konzentration der Säure vorliegt, die höchstens 140 g/l beträgt;
- eine Konzentration des Bestandteils (C) vorliegt, die von 5 bis 30 g/l beträgt;
- jedes Molekül des Bestandteils (C) von 4 bis 10 Kohlenstoffatome aufweist;
- jedes Molekül des Bestandteils (C) höchstens 1 Hydroxylgruppe aufweist und
- mindestens ein Sauerstoffatom in einem Etheranteil in jedem Molekül an eine einwertige Alkyl-Endgruppe gebunden ist, die mindestens 2 Kohlenstoffatome enthält.

6. Verfahren nach einem der Ansprüche 1 bis 5, wobei die Polier- und Passivierflüssigkeit zu einem Zeitpunkt während des Verfahrens mindestens 2,5 g Metallionen/l enthält.

7. Verfahren nach einem der Ansprüche 1 bis 6, wobei die Polier- und Passivierflüssigkeit während ihres Kontakts mit der metallischen Oberfläche, die bei einer Temperatur poliert und passiviert wird, die von 20 bis 50 °C beträgt, aufrechterhalten wird.

8. Verfahren nach einem der Ansprüche 1 bis 7, wobei:
- Kontakt zwischen der Polier- und Passivierflüssigkeit und der Metalloberfläche entweder durch Eintauchen oder durch Besprühen hergestellt wird und
- die Kontaktdauer höchstens 30 Sekunden beträgt, wenn der Kontakt durch Besprühen hergestellt wird, und höchstens 30 Minuten beträgt, wenn der Kontakt durch Eintauchen hergestellt wird.

## Revendications

1. Procédé de brillantage et passivation d'une surface en acier inoxydable par contact de ladite surface avec une composition liquide de brillantage et passivation qui comprend de l'eau et les composants suivants dissous :
(A) au moins un acide ;
(B) au moins une substance contenant une fraction peroxy ; et
(C) au moins une substance organique choisie dans le groupe constitué par :
des substances constituées de molécules qui contiennent à la fois au moins une fraction éther et au moins une fraction hydroxyle dans chaque molécule ;
dans lequel
le composant acide (A) comprend un acide choisi dans le groupe constitué par les acides sulfurique, sulfureux, fluorhydrique, et
chlorhydrique dans une concentration d'au moins 5 grammes d'acide par litre de liquide de brillantage et passivation total, et, en plus, comprend également un acide contenant du phosphore dans une quantité de pas plus de 25 grammes par litre de liquide de brillantage et passivation total.

2. Procédé selon la revendication 1, dans lequel dans le liquide de brillantage et passivation, la masse de tous les acides contenant du phosphore, mesurée comme leur équivalent stoechiométrique sous forme de H₃PO₄, avec la stoechiométrie basée sur des nombres égaux d'anions contenant du phosphore formés vraiment ou potentiellement par ionisation dans la solution aqueuse, à un rapport à la masse de composant (C), les deux masses étant mesurées dans la même unité, qui est de 0,03:1,00 à 8:1,00.

3. Procédé selon l'une quelconque des revendications 1 et 2, dans lequel dans le liquide de brillantage et passivation
- il y a une concentration en acide qui est au plus de 500 g/l ; et
- il y a une concentration en composant (C) qui est de 0,4 à 75 g/l.

4. Procédé selon l'une quelconque des revendications 1 à 3, dans lequel dans le liquide de brillantage et passivation :
- chaque molécule de composant (C) possède de 3 à 30 atomes de carbone ;
- chaque molécule de composant (C) n'a pas plus de 3 groupes hydroxyle ; et
- au moins un atome d'oxygène dans une fraction éther dans chaque molécule est lié à un groupe alkyle monovalent terminal qui contient au moins 2 atomes de carbone.

5. Procédé selon la revendication 1, dans lequel dans le liquide de brillantage et passivation :
- la masse de tous les acides contenant du phosphore, mesurée comme leur équivalent stoechiométrique sous forme de H₃PO₄, avec la stoechiométrie basée sur des nombres égaux d'anions contenant du phosphore formés vraiment ou potentiellement par ionisation dans la solution aqueuse, à un rapport à la masse de composant (C), les deux masses étant mesurées dans la même unité, qui est de 0,7:1,00 à 6:1,00:
- il y a une concentration en acide qui est au plus de 140 g/l ;
- il y a une concentration en composant (C) qui est de 5 à 30 g/l ;
- chaque molécule de composant (C) possède de 4 à 10 atomes de carbone ;
- chaque molécule de composant (C) n'a pas plus de 1 groupe hydroxyle ; et
- au moins un atome d'oxygène dans une fraction éther dans chaque molécule est lié à un groupe alkyle monovalent terminal qui contient au moins 2 atomes de carbone.

6. Procédé selon l'une quelconque des revendications 1 à 5, dans lequel, à certains moments pendant le processus, le liquide de brillantage et passivation contient au moins 2,5 g/l d'ions métalliques.

7. Procédé selon l'une quelconque des revendications 1 à 6, dans lequel le liquide de brillantage et passivation est maintenu, pendant son contact avec la surface métallique qui est brillantée et passivée, à une température qui est de 20 à 50°C.

8. Procédé selon l'une quelconque des revendications 1 à 7, dans lequel :
- un contact entre le liquide de brillantage et passivation et la surface métallique est établi soit par immersion soit par pulvérisation ; et
- la durée de contact n'est pas supérieure à 30 secondes si le contact s'effectue par pulvérisation, et elle n'est pas supérieure à 30 minutes si le contact s'effectue par immersion.
